Europäisches Patentamt

European Patent Office

Office européen des brevets

(11) Veröffentlichungsnummer: **0 124 887**
**A2**

(12) # EUROPÄISCHE PATENTANMELDUNG

(21) Anmeldenummer: **84105018.0**

(22) Anmeldetag: **04.05.84**

(51) Int. Cl.³: **A 61 C 17/04**

(30) Priorität: **07.05.83 DE 3316741**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **Dürr-Dental GmbH & Co. KG**
**Postfach 305 Höpfigheimer Strasse 17**
**D-7120 Bietigheim(DE)**

(72) Erfinder: **Hofman, Hans-Joachim**
**August-Lämmle-Strasse 26**
**D-7064 Remshalden 3(DE)**

(72) Erfinder: **Bollmann, Andreas**
**Holderstrasse 12**
**D-7140 Ludwigsburg-Ossweil(DE)**

(74) Vertreter: **Utermann, Gerd, Dipl.-Ing.**
**Kilianstrasse 7 Kilianspassage Postfach 3525**
**D-7100 Heilbronn(DE)**

(54) Vorrichtung zur Bereitstellung, ggf. Mischung mit Wasser und Zuführung von Reinigungs- und Desinfektionsflüssigkeit zu zahnärztlichen Sauganlagen.

(57) Die Vorrichtung zur Bereitstellung, ggf. Mischung mit Wasser und Zuführung von Reinigungs- und Desinfektionsflüssigkeit zu zahnärztlichen Sauganlagen hat in einem Vorratsgefäß (18) Desinfektions- und ggf. Reinigungskonzentrat (20), welches über ein Konzentratmagnetventil (36) in der Pumpe (24) dem von ihr geförderten Wasser mit Hilfe einer Programmsteuerung beigemischt werden kann. Wasser oder Wasser-Konzentrat-Gemisch werden durch die Zuführleitung (11) einem Zwischensammelbehälter im Desinfektionsanschlußgehäuse (60) zugeführt und aus diesem mit Hilfe einer Injektorsaugeinrichtung, Verteilräumen und Ansteckanschlüssen (100) für die Enden der Saugschläuche (66) zugeführt.

EP 0 124 887 A2

./...

Fig. 1

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

Europäische Patentanmeldung

D 12. 12 EP 49
2. Mai 1984/1S

Anmelder:  Firma
Dürr-Dental GmbH & Co. KG

Höpfigheimer Straße 17
Postfach        305

D-7120 Bietigheim

Bezeichnung:  Vorrichtung zur Bereitstellung, ggf. Mischung
mit Wasser und Zuführung von Reinigungs- und
Desinfektionsflüssigkeit zu zahnärztlichen
Sauganlagen

Beschreibung:

Die Erfindung betrifft eine Vorrichtung zur Bereitstellung,
ggf. Mischung mit Wasser und Zuführung von Reinigungs- und
Desinfektionsflüssigkeit zu zahnärztlichen Sauganlagen,
bei der die Flüssigkeiten in einem Vorratsbehälter zur
Verfügung stehen und über eine Leitung dem freien Endbereich der Saugschläuche zuführbar sind.

./2

0124887

Mit zahnärztlichen Sauganlagen wird ein Gemischstrom aus Luft, Wasser, Speichel, Zahnsubstanz und dgl. aus dem Patientenmund angesaugt, von der Luft getrennt und der Rest einem Abfluß zugeführt. In den Saugschläuchen und Rohrleitungen setzen sich Bestandteile des Gemischstromes, insbesondere auch Bakterien, Blutreste und dgl. ab. Diese müssen regelmäßig herausgespült und die Rohrleitungen und sonstigen Anlageteile müssen gereinigt und desinfiziert werden. Dazu sind Desinfektionsmittel-Wasser-Gemische durch die Leitungen zu führen. Dazu benutzt man den Sog und läßt diese Flüssigkeit durch die Saugkanüle oder eine getrennte Ansatzeinrichtung in den Saugschlauch oder an anderer Stelle eintreten. Solche Arbeiten müssen regelmäßig durchgeführt werden, um den hygienischen Anforderungen zu genügen.

Aus DE-OS 28 14 401 ist eine Zuführeinrichtung für Reinigungs- und Desinfektionsmittel an zahnärztlichen Sauganlagen bekannt, bei der ein loser Behälter mit dem Gemisch aus Wasser und Desinfektions- und Reinigungsmittel gefüllt ist. Auf eine rohrförmige Dosier- und Mischeinrichtung wird mit Hilfe einer Steckverbindung das Saugschlauchende aufgesteckt und saugt durch das Rohr und Nebenluftkanäle das Wasser-Desinfektions-Reinigungsmittel-Gemisch und Luft in dosierter Form an. Dieses Saug- und Dosiersystem hat sich bewährt und ist weiterhin anwendbar. Die Verwendung eines getrennten Behälters, der von Hand gefüllt werden muß, erfordert jedoch in größeren Praxen einen beträchtlichen Aufwand, zumal dann, wenn sehr häufig desinfiziert werden muß.

Aus EP-OS 0 023 036 ist es bekannt, an einer Einheit aus Speischale sowie Saug- und Trenneinrichtung in einen Behälter, der das Desinfektionsmittel enthält, Wasser einzuführen und mit dem Wasserdruck in die Speischale und über den Siphon an ein Ansteckstück das Wasser-Desinfektionsmittel-Gemisch durch Saugen zu führen. Auch kann es mit einer getrennten Leitung zu dem Ansteck-

.*/3*

anschluß geführt werden. Das Saugschlauchende wird in diesen Anschluß eingesteckt, so kann der Saugschlauch mitgespült und gereinigt werden. Bei dieser schematischen Darstellung sind die für die praktische Ausführung vorteilhaften Gestaltungen nicht dargestellt. Große Schwierigkeiten sind zu befürchten, wenn das Reinigungsmittelgemisch mit Hilfe des Wasserdrucks gefördert wird. Die Verunreinigungsgefahren durch rückströmende Flüssigkeitsanteile, die mit Bakterien und Blutbestandteilen kontaminiert sind, sind nicht erkannt und für sie sind keine Lösungen vorgeschlagen.

Der Erfindung liegt die Aufgabe zugrunde, eine Vorrichtung der eingangs genannten Art in einer den praktischen Bedürfnissen geeigneteren Art für ein automatisches Reinigen und Desinfizieren zur Verfügung zu stellen, die eine den Bedürfnissen entsprechende Flüssigkeitsmenge für die erforderliche Zeit an den Eingangsstellen der Saugeinrichtung zur Verfügung stellt und nachteilige Rückströme verhindert.

Erfindungsgemäß ist vor allem vorgesehen, daß im Bereich der Halteeinrichtungen der nicht benutzten Saugschlauchenden ein Zwischensammelbehälter vorgesehen ist, der eine frei in seinem oberen Bereich endende Zuführleitung für die Flüssigkeiten aufweist, aus der Wasser oder Wasser-Reinigungsund/oder Desinfektionsmittel-Gemisch in den Zwischensammelbehälter eintritt und wobei im Zwischensammelbehälter wenigstens ein Flüssigkeitssaugrohr angeordnet ist, welches zu einem Ansteckanschluß für das Ende eines Saugschlauches führt.

Damit kein Rückstrom erfolgen kann, sind an geeigneter Stelle Unterbrechungen vorzusehen. Die Erfindung schlägt nun vor, einen Zwischensammelbehälter dort anzuordnen, wo die kürzesten Wege zu den Einlaßstellen in die Sauganlage bestehen, nämlich im Bereich der Halteeinrichtungen der nicht benutzten Saugschlauchenden. Dadurch, daß von oben frei aus einer Leitungsöffnung gespeist wird, ist ein Rückstrom aus dem Vorrat nicht möglich und evtl. in den Zwischenvorrat eintretende Verunreinigungen können nicht die bis zum Wasseranschluß führenden Leitungen kontaminieren. Durch ein geeignet angeordnetes Saugrohr wird dann aus diesem Zwischensammelbehälter die jeweils zur Verfügung stehende Flüssigkeit dem Ansteckanschluß für das Ende eines Saugschlauches zugeführt, so wird durch die gesamte Anordnung der Reinigungsflüssigkeitsstrom hindurchgeführt und der Steckanschluß ist in unmittelbarer Nähe der ohnehin für die Handhabung des Zahnarztes günstig angeordneten Ablageeinrichtungen vorgesehen. Kürzeste Wege zum Zwischensammelbehälter sind gewährleistet, so daß mit dem ohnehin vorhandenen Unterdruck auch die Flüssigkeit eingesaugt werden kann und keine weitere Druckförderung aus dem Zwischensammelbehälter mit Hilfe einer Druckpumpe oder eines unter Druck zur Verfügung stehenden Wasservorrates erforderlich ist. Der Druck der Netzwasserversorgung kann ohnehin nicht benutzt werden, weil es unzulässig ist, ohne Luftstrecke zu installieren. Der Zwischensammelbehälter kann relativ klein gewählt werden und ist günstig mit mehreren Anschlüssen und Fühl- und Anzeigeeinrichtungen im günstigen Sicht- und Auswertungsbereich zu versehen. Aus einem Zwischensammelbehälter können mehrere Ansteckanschlüsse versorgt werden, und zwar mit einzelnen Rohren oder mit einem gemeinsamen Zuführrohr und einem geeigneten Verteiler, was eine konstruktiv einfache Realisierung ermöglicht. Wenn man die Reinigung nur mit Flüssigkeit, also Wasser oder einem Wasser-Reinigungs- und Desinfektions-mittel-Gemisch betreiben will, benötigt man sehr große Flüssigkeitsmengen, um mit Sicherheit alle Flächen einwandfrei zu spülen. Es ist deshalb von Vorteil, wie bei dem manuellen Einfüllbetrieb auch hier mit der Ansaugung eines Luft-Flüssigkeits-Gemischs zu arbeiten, welches dann zur Vernebelung und damit zur Benetzung und Reinigung aller Flächen führt. Die Luft dafür wird durch mindestens eine Nebenlufteinlaßöffnung zugeführt.

In vielen Fällen kann der Sog am Ende des Saugschlauches nicht ausreichen, um eine geeignete Luftmenge anzusaugen und trotzdem noch durch eine reine  Beipaß-Leitung die Flüssigkeit aus dem Zwischensammelbehälter über die Trennwand anzuheben und in das System einzuführen. Dann kann gemäß einem weiteren vorteilhaften Merkmal der Erfindung dem Flüssigkeitssaugrohr eine Atmosphärenluftzuführeinrichtung mit Injektorsauganordnung zugeordnet sein, durch welche die den Saugschläuchen zugeführte Saugluft gelangt und die Flüssigkeit aus dem Zwischensammelbehälter absaugt. So kann im Bereich der Flüssigkeitsansaugung durch eine geeignete Injektoreinrichtung der Sog ohne Fremdenergien und ohne Fremdantriebsmittel vergrößert werden.

Das Verhältnis von Luft zu Flüssigkeit ist unter Berücksichtigung der notwendigen Zeiten für die sichere Desinfektion geeignet zu wählen, wie es bereits bei den manuell zu befüllenden Einrichtungen in vorteilhafter Weise üblich ist. Das kann durch geeignete Drosselquerschnitte erreicht werden. Geeignete Leitungslängen und Leitungsquerschnitte können unter Berücksichtigung der üblichen Saugdrucke und Saugluftmengen  das Verhältnis von Luft und  Flüssigkeit bestimmen, so daß mit einer reinen Zeitsteuerung gesichert werden kann, daß stets ausreichend desinfiziert wird.

Die bisherigen Reinigungs- und Desinfiziereinrichtungen die an das Schlauchende angriffen, hatten stets ein besonderes Problem. Entweder wurde durch die Kanüle aus einem einfachen Topf gesaugt, oder es wurde mit Hilfe der besonderen Vorrichtung nach DE-OS 28 14 401 angesaugt, wobei anstelle der Saugkanüle ein spezielles Ansteckstück in das Schlauchende eingeführt wurde. Dabei wurden dann die äußersten Enden der Saugschläuche nicht mehr vom Reinigungs- und Desinfektionsmittel benetzt, so daß dort Reste von Verschmutzungen u.Bakterien verbleiben konnten. Dem wird nach einem weiteren vorteilhaften Merkmal der Erfindung dadurch vorgebeugt, daß die Ansteckanschlüsse mit die Saugschlauchenden auch in dem Dichtbereich für die Saugkanüle frei angreifenden Klemmhaltern ausgestattet sind. Die Klemmhalter greifen also nicht auf Flächen an, die möglicherweise kontaminiert sind, sondern an anderen Stellen, so daß auch die im Normalbetrieb die Dichtung der Saugkanüle bildenden Stellen gespült, gereinigt und desinfiziert werden können. Dafür werden zweckmäßig Einsteckanschläge für die Saugschlauchenden vorgesehen, welche ein freies Umspülen der Saugschlauchenden und aller Leitungsbereiche gestatten. Das Luft-Flüssigkeits-Gemisch tritt dann im geringen Abstand vom Saugschlauchende in das Innere des Ansteckanschlusses ein. Man kann beispielsweise die Saugschlauchenden von außen umgreifende Einsteckkappen vorsehen. Ggf. kann man jedoch allein oder zusätzlich in die Saugschlauchenden eingreifende, geschlitzte, und nur punkt- oder linienförmig angreifende Klemmrohrteile vorsehen, so daß durch die Schlitze und zwischen dem Rohrteil und den Klemmpunkten ebenfalls gespült werden kann.

Aus dem Zwischensammelbehälter kann man auch die schon bekannte Zuführung von Flüssigkeit während des normalen Saugbetriebs speisen, indem man vorzugsweise weitere Flüssigkeitssaugrohre zu den Eingangsbereichen der Absperrelemente der Saugschläuche führt, weil diese an ortsfesten Punkten liegen und somit problemlos ständig mit einem kleinen Flüssigkeitsstrom und/oder Luft-Flüssigkeits-Gemisch versehen werden können. Die Vorrichtung kann man als getrennte Einrichtung herstellen, die frei in der Nähe der übrigen Einrichtungen montiert wird. Besonders zweckmäßig ist es, wenn sie ein Desinfektionsanschlußgehäuse erhält, welches an dem Haltergehäuse passend angeordnet ist. Dazu sieht eine besonders vorteilhafte Ausgestaltung der Erfindung vor, daß das Desinfektionsanschlußgehäuse als in der Querschnittskonfiguration der Konfiguration des Haltergehäuses der Anschluß- und Ventilelemente passendes, seitlich ansetzbares Bauelement ausgebildet ist. Insbesondere für Einrichtungen, die ohnehin nach dem Baukastenprinzip gestaltet und nebeneinander reihbar sind, kann ein solches weiteres Element passend ausgestattet und nur stirnseitig vor- oder zwischengesetzt werden. Es gestattet dann die Vorteile des Baukastensystems bei Produktion, Montage und Erweiterung zu nutzen und kann dadurch vor allem auch an älteren Anlagen schnell installiert werden.

Dem Zwischensammelbehälter sind zweckmäßig Füllstandsfühleinrichtungen zuzuordnen, die das Überfüllen verhindern, die Wassermangel anzeigen können und die vor allem die Zuführung, Ein- und Ausschalten und auch einen Programmablauf einschalten helfen können. Die Füllstandsfühleinrichtungen werden zweckmäßig von in den Zwischensammelbehältern ragenden, unterschiedlich langen Elektroden gebildet. Sie sind so einfach und preiswert zu realisieren. Man ordnet den Füllstandsfühleinrichtungen zweckmäßig eine Steuerschaltung zu, die die Zuführung von Wasser und/oder Wasser-Desinfektionsmittel-Gemisch steuert und welche beim Ansetzen der Saugschläuche durch den auftretenden Unterdruck und den in das Saugrohr einströmenden Flüssigkeitsspiegel den Programmablauf startet und in Abhängigkeit vom Flüssigkeitsspiegel die vorzugsweise motorisch betriebene Zuführpumpe ggf. mit Zeitverzögerung schaltet.

Für die Zufuhr von Wasser und Wasser-Desinfektions- und Reinigungsmittel-Gemisch ist der Vorrichtung eine geeignete Anordnung beizufügen. Diese kann in verschiedener Weise aufgebaut sein und beispielsweise von Hand gefüllt und/ oder oberhalb des Zwischensammelbehälters angeordnet sein, so daß mit Schwerkraftzulauf gearbeitet werden kann. In den meisten Fällen wird sich das an den Arbeitsplätzen der Zahnärzte nicht realisieren lassen. Deshalb ist es

./8

zweckmäßig für die vorstehend beschriebene Vorrichtung, aber auch für andere, ein ortsfestes Geräteteil mit Zuführmitteln für die Flüssigkeitszufuhr, vorzugsweise zu dem Zwischensammelbehälter, wenigstens jedoch zu den Saugschlauchenden zu versehen, welches ein abnehmbares und/oder austauschbares Vorratsgefäß für Desinfektions- und ggf. Reinigungskonzentrat aufweist, wobei eine am Boden des Vorratsgefäßes entnehmende Leitung vorgesehen ist, die steckbar mit dem ortsfesten Geräteteil verbindbar ist und wobei Füllstandsfühleinrichtungen vorgesehen sind. Ein solches abnehmbares und/oder austauschbares Vorratsgefäß gestattet es, nunmehr das Konzentrat für eine Vielzahl von Reinigungs- und Desinfektionsvorgänge in der Vorrichtung bereitzuhalten und nach Bedarf mit dem Wasser zu mischen und dann den Stellen zuzuführen, an denen der Eintritt in die Sauganlage erfolgt. Auch eine solche Einrichtung kann noch schwerkraftbetrieben sein, wenn es die konstruktiven Verhältnisse zulassen. Durch das abnehmbare Vorratsgefäß ist es möglich, dieses gut zu befüllen und ggf. zu reinigen. Auch Austauschpackungen können dem schnellen und hygienischen Betrieb dienlich sein. Eine aus einer Wasserzuführung mit Wasserzwischensammelbehälter absaugende Pumpe wird zweckmäßig mit einem Mischeinlaß für Desinfektionskonzentrat versehen und bewirkt einerseits die Förderung von einer nicht allzu fernen Stelle in den Zwischensammelbehälter an den Haltern und mischt gleichzeitig bedarfsweise im gewünschten Verhältnis das Konzentrat zu. Dabei kann eine übliche Saugpumpe nur mit einer Injektorzuführung für das Konzentrat ausgestätet werden. Damit man auch Wasser allein zuführen kann, sieht man zweckmäßig in der Desinfektionskonzentratleitung ein von der Schaltung betätigbares Magnetventil vor. So kann ein Programm realisiert werden, welches zunächst nur Wasser, dann Wasser-Desinfektionsmittel-Gemisch und danach wieder Wasser spült, wobei die Zuführzeiten in weiten Grenzen variiert und vorgegeben werden können. Die Steuerschaltung wirkt zweckmäßig mit Füllstandsfühleinrichtungen für den Vorratsbehälter zusammen und zeigt den abnehmenden Füllstand an und blockiert ggf. bei fehlendem Desinfektionskonzentrat den Betrieb der ganzen Anlage, so daß die Hygieneanforderungen automatisch eingehalten werden. Eine Wassermangelanzeige dient dem gleichen Zweck und kann ggf. mit einer Betriebsverhinderungseinrichtung über die Steuerschaltung gekoppelt werden. Zweckmäßig sind auch Anzeigeglieder für den Füllstand des Desinfektionskonzentrats und/oder den Füllungszustand des Zwischensammelbehälters und/oder die Wassermangelsicherung anzuordnen. Weitere Einzelheiten, Vorteile, Merkmale und Gesichtspunkte sind auch dem nachfolgenden, anhand der Zeichnungen gegebenen Beschreibungsteil von Ausführungsbeispielen für die Gesamtanordnung und ihre Einzelteile und den nicht genau abgehandelten Ansprüchen zu entnehmen.

Ausführungsbeispiele der Erfindung werden nachfolgend anhand der Zeichnungen näher erläutert.

Es zeigen:

Fig. 1    Die schematisierte Schrägansicht der gesamten Vorrichtung mit ihren beiden Einheiten;

Fig. 2    einen schematischen Vertikalschnitt durch die Vorrats- und Pumpeinheit;

Fig. 3    einen schematisierten Längsschnitt durch die Sammel-Verteil- und Absaugbaugruppe.

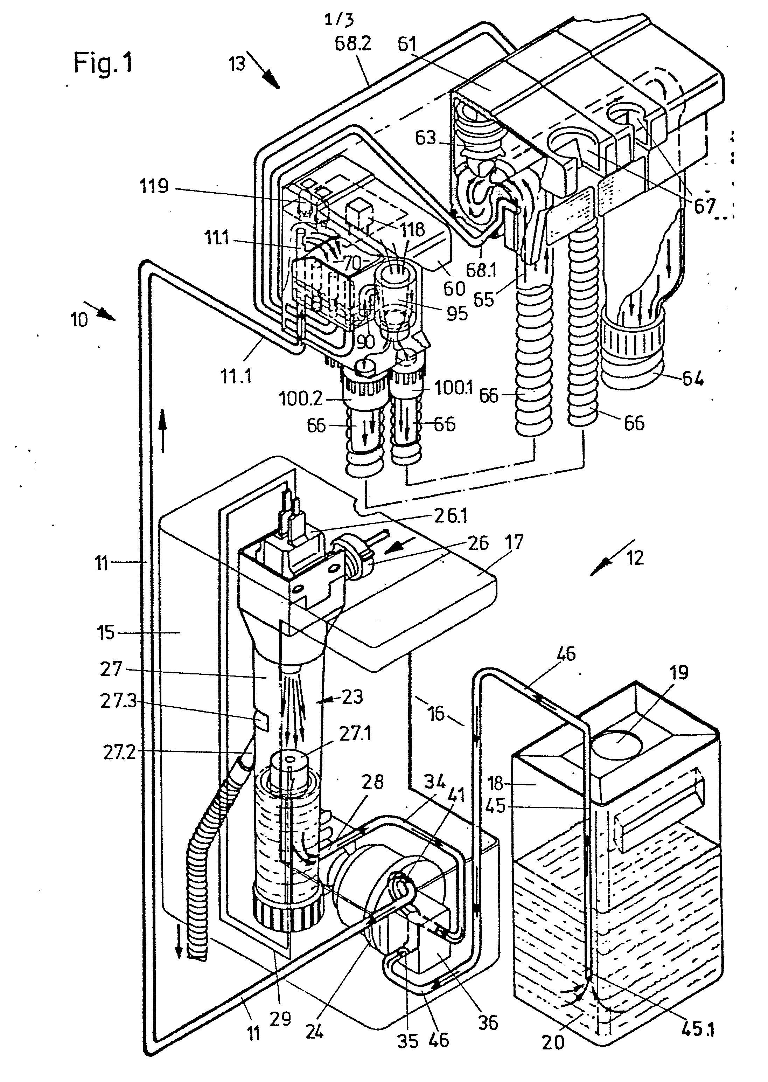

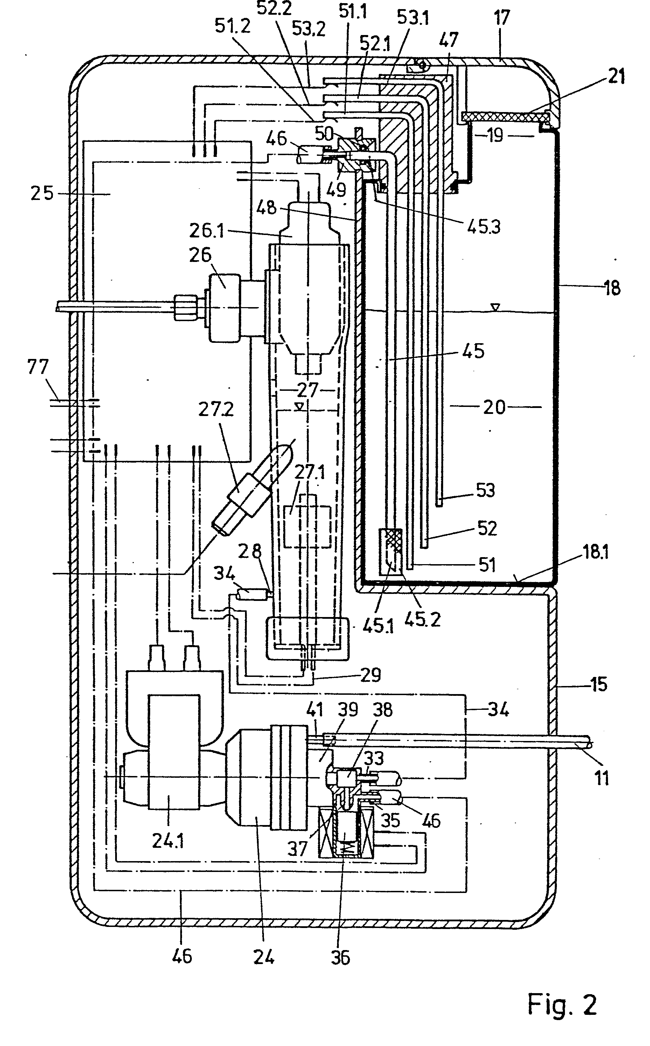

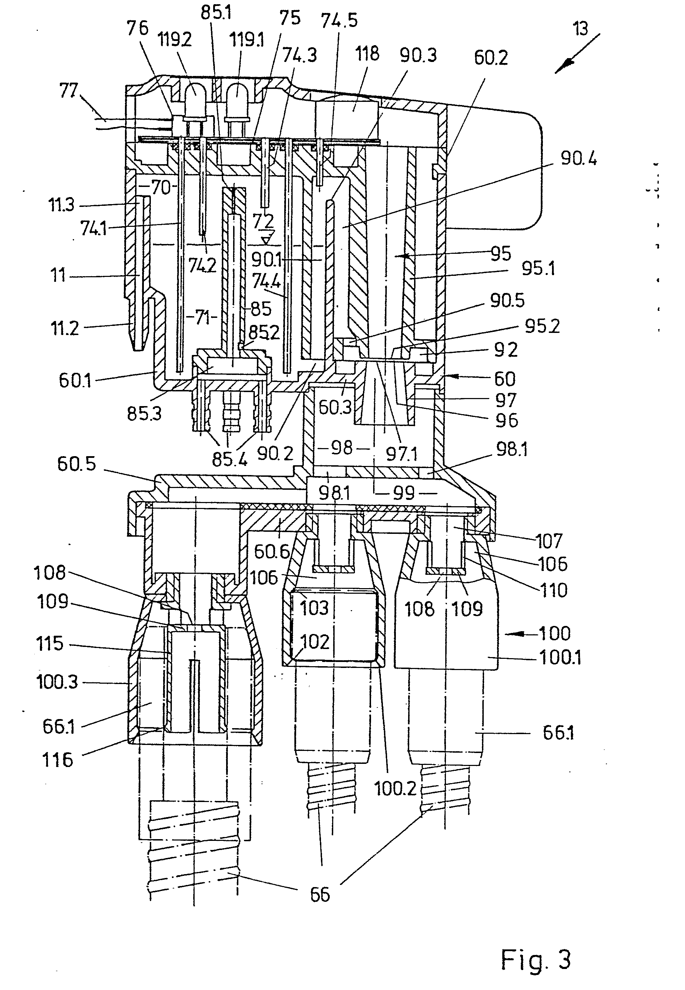

Die Vorrichtung 10 zur Bereitstellung, ggf. Mischung mit Wasser und Zuführung von Reinigungs- und Desinfektionsflüssigkeit ist in Fig. 1 in schematischen, teilweise auseinandergezogenen und nach Art von Explosionszeichnungen gestalteten Schrägbildern zusammenhängend veranschaulicht. Weitere wesentliche Details gehen aus den Fig. 2 und 3 hervor.

Die ganze Vorrichtung 10 besteht im wesentlichen aus zwei über eine Zuführleitung 11 verbundenen Vorrichtungsteilen, die sowohl räumlich voneinander getrennt als auch in einem einzigen Gerätegehäuse unmittelbar zusammen untergebracht werden können. Die beiden Teile stellen, wie unten links auf der Figur veranschaulicht, eine Vorrats- und Pumpeneinheit 12 und, wie oben rechts auf der Fig. 1 veranschaulicht, eine Sammel-, Verteil- und Absaugbaugruppe 13 dar. Sie werden zur Verkürzung der Schreibweise als V-P-Einheit 12 und als S-V-A-Baugruppe 13 im folgenden bezeichnet. Die V-P-Einheit 12 hat als ortsfester Geräteteil ein V-P-Gehäuse 15, welches im schematisierten Schnitt aus Fig. 2 hervorgeht. Ein Seitenbereich ist als Vorratsgefäßaufnahmeraum 16 ausgespart und mit einem Klappdeckel 17 versehen. In den Bereich 16 kann das Vorratsgefäß 18 für Konzentrat eingesetzt werden. Das Vorratsgefäß 18 hat eine Einfüllöffnung 19 für das Reinigungs- und ggf. Desinfektionskonzentrat 20, welches zur Verkürzung als "Konzentrat 20" bezeichnet wird. Eine Dichtung 21 im Klappdeckel 17 dichtet die Einfüllöffnung 19 im Normalzustand ab.

Der übrige Innenraum des Gehäuses 15 enthält drei wesentliche Bestandteile, und zwar eine Wasserzuführung 23, eine Pumpe 24 und eine Schaltung 25. Die Schaltung 25 ist nur in Fig. 2 schematisch als Rechteck mit Leitungsanschlüssen dargestellt und wird nach den im folgenden behandelten Funktionen in der dem Fachmann geläufigen Weise aufgebaut.

Die Wasserzuführung 23 ist vorzugsweise in der Form aufgebaut wie sie in der bisher nicht veröffentlichten deutschen Patentanmeldung P 32 32 290.9 behandelt ist. Sie hat einen Wasseranschluß 26 zum Anschließen an eine Wasserleitung, ein Wassermagnetventil 26.1 und einen Wasserzwischensammelbehälter 27 mit einem Steuerschwimmer 27.1, einem Überlaufanschluß 27.2, der zum Abfluß führt und eine Überlaufsicherheitsöffnung 27.3 sowie Auslaßanschlüsse 28 und Steuerleitungen 29. Sie sichert, daß kein in den Wasserzwischensammelbehälter 27 gelangtes Wasser oder/und keine Verunreinigungen in den Wasseranschluß 26 zurückgesaugt werden können.

Die Pumpe 24 ist beispielsweise als Kreiselpumpe mit Elektromotor 24.1 ausgebildet. Sie kann auch in anderer Weise, beispielsweise als Membranpumpe oder dergl. ausgebildet sein. Sie hat einen Wassereinlaß 33, der über eine Wassersaugleitung 34 mit einem Auslaßanschluß 28 der Wasserzuführung 23 verbunden ist.

Im Unterschied zu sonstigen üblichen Wasserpumpen ist sie ferner mit einem Konzentrateinlaß 35 ausgestattet. Diesem ist ein Konzentratmagnetventil 36 zugeordnet, dessen Konzentratausgang 37 in einen Injektor 38 im Gehäuse 39 der Pumpe 24 führt, dessen Eingang der Wassereinlaß 33 ist. Die Druckseite der Pumpe hat einen Flüssigkeitsausgang 41, an den die Zuführleitung 11 angeschlossen ist.

Das Vorratsgefäß 18 für das Konzentrat 20 hat eine Gefäßkonzentratleitung 45, deren unteres Ende 45.1 bis zum Boden 18.1 des Vorratsgefässes reicht und dort mit einem Filter 45.2 versehen ist. Das Vorratsgefäß 18 hat in seinem oberen Bereich einen Steckanschlußhalter 47. Dieser ist zur Veranschaulichung der Leitungen und ihrer Steckmöglichkeiten nicht maßstäblich und auch in seiner räumlichen Anordnung nur so gezeigt, daß man alle Steckleitungen gut sieht. In der praktischen Ausführung kann er in vielerlei Weise gestaltet werden. Aus dem Steckanschlußhalter 47 steht das Konzentratsteckende 45.3 heraus. Ihm ist in der Gehäusewand 48 des Gehäuses 15 eine Steckaufnahme 49 zugeordnet, die eine Dichtung 50 aufweist und an welche die Konzentratleitung 46 angeschlossen ist. So kann die Pumpe 24 über die Konzentratleitungen 45 und 46 und die Wassersaugleitung 34 bei geöffnetem Konzentrat- magnetventil 36 Konzentrat 20 mit dem Wasser ansaugen.

Für die Ermittlung der Füllungszustände des Konzentrats 20 sind hier beispielsweise drei Elektroden 51, 52 und 53 dargestellt, die als im Steckanschlußhalter 47 befestigte, senkrecht nach unten in das Vorratsgefäß mit unterschiedlicher Länge ragende Stäbe ausgebildet sind. Ihre abgewinkelten Elektroden-Steckenden 51.1, 52.1 und 53.1 werden in elektrische Steckkontakte 51.2, 52.2 und 53.2 eingesteckt. Diese sind über Leitungen mit der Schaltung 25 verbunden. Die Elektroden 51 bis 53 dienen dazu, Informationen über den Füllungszustand des Konzentrats 20 an die Schaltung 25 zu liefern. Die unterschiedlichen Längen sind gewählt, um eine Vorwarnung beim Absinken zu geben, so daß dann noch Zeit zum Nachfüllen bleibt, jedoch die Anlage noch mehrfach Konzentrat entnehmen kann bis der Spiegel unter das Ende der Elektrode 52 abgesunken ist. Das Vorratsgefäß 18 kann nach Hochklappen des Deckels 17 seitlich herausgenommen werden. Dabei ziehen das Konzentrat-Steckende 45.3 und die Elektroden-Steckenden 51.1, 52.1 und 53.1 sich aus den zugeordneten Steckkontakten 51.2, 52.2, 53.2 heraus. So kann das Vorratsgefäß 18 selbst auch außerhalb der Vorrichtung gefüllt und ggf. gereinigt werden. Das Vorratsgefäß kann auch ein Wegwerfgefäß sein. Dann wird man zweckmäßig die Elektroden und die Gefäß-Konzentratleitung derart gestalten, daß sie stets an der Vorrichtung bleiben oder mit ihr steckbar verbunden sind, jedoch jeweils durch geeignete Öffnungen in das Wegwerfvorratsgefäß eingeführt und nach Aufbrauchen des Konzentrats herausgenommen werden.

Die Zuführleitung 11 führt - wie erwähnt - zur Sammel-Verteil- und Absaugbaugruppe/S-V-A-Baugruppe 13. Diese ist in Fig. 1 rechts oben in schematisierter Schrägansicht teilweise aufgebrochen und in Fig. 3 im Vertikallängsschnitt, jedoch zur besseren Veranschaulichung in etwas anderer räumlicher Anordnung dargestellt. Dabei sind nämlich alle wesentlichen Elemente in einer Ebene liegend dargestellt, obwohl sie zum Teil nebeneinander, hintereinander oder gestaffelt angeordnet sind. Für die Funktion ist das jedoch nicht wesentlich. Die S-V-A-Baugruppe 13 hat ein Desinfektionsanschlußgehäuse 60, welches mehrteilig ausgebildet und zusammengeklebt oder zusammengeschraubt ist. Seine Einzelheiten werden nur so weit behandelt, wie es für die Funktion und die erfindungswesentliche Konstruktion von Bedeutung ist.

Das Desinfektionsanschlußgehäuse 60 stellt - wie aus Fig. 1 ersichtlich - eine Baugruppe dar, die an Vorrichtungen in zahnärztlichen Sauganlagen zum Anschließen und Halten von wenigstens zwei Saugdüsenschläuchen, wie sie in DE-OS 27 13 320 beschrieben sind, seitlich angesetzt werden kann. Sie kann auch zwischen solche Baugruppen gesetzt werden. Sie kann auch einzeln angeordnet sein und andere Gehäuseform haben. Hier ist die Form des Desinfektionsanschlußgehäuses 60 in der Querschnittskonfiguration so gewählt, wie die Querschnittskonfiguration der Haltergehäuse 61 für die Saugschläuche, die in Fig. 1 oben rechts in verschiedenen Ausgestaltungen, jedoch mit gleichem Querschnittsprofil dargestellt sind. Es ist zur Verdeutlichung der Funktion ein Zwischenraum gezeichnet. Dabei handelt es sich um Baugruppen, deren Gehäuse etwas unterschiedlich sind, die jedoch im folgenden kurz alle als Haltergehäuse 61 bezeichnet sind. Sie enthalten innere Kanäle 62 für die Luft-Flüssigkeits-Gemisch-Führung und ein Ventil 63. Eine Ausgangsleitung 64 führt über eine Separierautomatik, wie sie beispielsweise in DE-OS 27 13 321 behandelt ist, zum Abfluß. Die Eingänge 65 der Haltergehäuse 61 sind mit Saugschläuchen 66 verbunden, deren freie Enden 66.1 in die Gabelhalterungen 67
gehängt werden können. In den Eingang 65 führen Flüssigkeitssaugrohre 68.1 und 68.2, die
es gestatten, die Haltergehäuse, Ventile und dgl. von
innen mit Wasser oder einem Wasser-Konzentrat-Gemisch
zu versorgen.

Das Desinfektionsanschlußgehäuse 60 weist in seinem Mittelteil 60.1 einen Zwischensammelbehälter 70 auf, in dem
Flüssigkeit 71 bis zum Flüssigkeitsspiegel 72 steht.
In den Zwischensammelbehälter 70 führt das Ende 11.1
der Zuführleitung 11, wofür ein Aufsteckanschluß 11.2
für die Zuführleitung in dem aus Kunststoff hergestellten
Desinfektionsanschlußgehäuse 60 ausgebildet ist, wie
es Fig. 3 verdeutlicht. Diese Zuführleitung hat ein
oberes freies Ende 11.3, welches oben in den Zwischensammelbehälter 70 frei einmündet und das Austreten
der geförderten Flüssigkeit gestattet, so daß sie sich
im ganzen Zwischensammelbehälter verteilen kann. Vom
Deckel 60.2 ragen vier Metallstäbe als Elektroden 74
mit unterschiedlicher Länge in den Zwischensammelbehälter 70. Sie sind oben in einer gedruckten
Schaltung 75 befestigt und weisen jeweils Steckanschlüsse
in einer Anschlußeinheit 76 auf und sind über Leitungen
mit der Schaltung 25 (Fig. 2) verbunden.

Im Zwischensammelbehälter ist ferner ein Standrohr 85
angeordnet, welches hohl ist und oben einen Lufteinlaß 85.1
und in seinem unteren Bereich einen Flüssigkeitseinlaß 85.2
aufweist. Sein Innenraum führt zu einem Flüssigkeitsverteiler 85.3, der mit drei Anschlußstutzen 85.4 verbunden
ist.

Die Anschlußstutzen 85.4 sind mit den Flüssigkeitssaugrohren
68.1 und 68.2 verbunden, so daß aus dem Zwischensammelbehälter 70 Flüssigkeit 71 in die Haltergehäuse 61 auch
während des Normalbetriebs eingesaugt werden kann.



- 15 -

0124887

Der Zwischensammelbehälter 70 enthält ferner ein in seinen Wandungen ausgebildetes Flüssigkeitssaugrohr 90, welches U-förmig mit einer im Schnitt als drei Wände gestaltenden Gestaltung gebildet wird. Der linke Rohrbereich 90.1 ist zum Zwischensammelbehälter 70 bei 90.2 offen. Oben reicht er bis zur Überlaufkante 90.3, die beträchtlich über dem Flüssigkeitsspiegel 72 liegt. Der in Fig. 3 rechte Flüssigkeitssaugrohrbereich 90.4 mündet unten bei 90.5 in einen ringförmigen Injektorraum 92.

Im Desinfektionsanschlußgehäuse 60 ist ferner eine Luftzufuhr 95 vorgesehen, und zwar in Form eines Injektors. Dazu ist ein innen konisches, oben mit seinem größeren Durchmesser zur Atmosphäre offenen Injektoreingangsrohr 95.1 mit einem unteren Injektordurchmesser 95.2 im Deckelteil 60.2 nach unten ragend ausgebildet. Es endet an einem Injektorspalt 96, der zum Injektorraum 92 offen ist. Im Boden 60.3 des Desinfektionsanschlußgehäuses 60, welches den Zwischensammelbehälter 70 bildet, ist ein Injektorausgangstrichter 97 gebildet, dessen kleinster Durchmesser 97.1 geringfügig größer als der Injektordurchmesser 95.2 ist und welcher den Injektorspalt 96 von unten her begrenzt. Der Injektorausgangstrichter 97 mündet in einen Gemischverteilungsraum 98, der Bestandteil des Flüssigkeitssaugrohres bzw. des Leitungssystems zu den Ansteckanschlüssen 100 ist und welcher über Öffnungen 98.1 mit dem Verteilraum 99 in Verbindung steht. Dieser ist in einem unteren Gehäuseteil 60.5 gebildet, in dem unten eine Anschlußplatte 60.6 eingesetzt ist. Diese Anschlußplatte hat hier drei Öffnungen bzw. Fortsätze, in welche die Ansteckanschlüsse 100 eingesetzt sind und zwar mit Zentralöffnungen.

Die Ansteckanschlüsse 100.1 und 100.2 sind gleich ausgebildet und für kleine Saugschlauchenden 66.1 von Saugschläuchen 66 geeignet ausgebildet.

./16

Die Ansteckanschlüsse sind hier als mit ihrer Innenöffnung über die Saugschlauchenden 66.1 passend ausgebildet und haben unten einen Rastrand 102 mit einer kleinen Wulst. sowie einen Einsteckanschlag 103. Oberhalb des Einsteckanschlages 103 ist ein Verteilraum 106 gebildet, in den der Einlaßstutzen 107 mündet, welcher eine Zentralöffnung 108 in einer Prallplatte 109 sowie Seitenöffnungen 110 aufweist, so daß das eintretende Luft-Flüssigkeits-Gemisch sich sehr gut verteilt und das gesamte Ende des Saugschlauches 66 einschließlich der inneren Dichtfläche für den Anschluß der Saugkanüle einwandfrei einsprüht und mit dem Flüssigkeitsfilm für eine einwandfreie Reinigung und Desinfektion versieht.

Der Ansteckanschluß 100.3 ist für einen Saugschlauch 66 größeren Durchmessers ausgebildet, im übrigen jedoch gleichartig gestaltet, nur hat er zusätzlich ein in das Saugschlauchende 66.1 eingreifendes geschlitztes Klemmrohrteil 115, dessen Ende nach außen ragende punkt- oder linienförmig angreifende Rast- und Haltenocken 116 aufweist. Die Verteilanordnung ist ähnlich getroffen mit Prallplatte 109, Zentralöffnung 108 und Seitenöffnungen 110 nur mit dem Unterschied, daß die Zentralöffnung in den Innenraum des Klemmrohrteils 115 mündet und die Verteilung durch die Schlitze erfolgt, während über die Seitenöffnungen 110 das äußere Ende umspült wird.

In Fig. 3 oben sind noch ein Schalter 118 für die Beeinflußung des Programms und zwei Anzeigeleuchten 119.1 und 119.2 dargestellt.

Die beschriebene Vorrichtung arbeitet folgendermaßen.

Durch geeignete Einschaltmittel wird das Magnetventil 26.1 geöffnet, so daß der Wasserzwischensammelbehälter 27 sich füllt und auf dem nötigen Füllstand mit Hilfe des Steuerschwimmers 27.1 hält. Wenn die beiden Elektroden 74.1 und 74.2 nicht benetzt sind, schaltet die Pumpe 24 ein. Das Konzentratmagnetventil 36 ist geschlossen. Die Pumpe 24 fördertWasser durch die Zuführleitung 11 und läßt es am oberen freien Ende 11.3 austreten, so daß sich der Zwischensammelbehälter 70 bis zum Flüssigkeitsspiegel 72 füllt und die Elektrode 74.2 benetzt wird. Dann schaltet die Förderpumpe ab. Jetzt können beim Saugen mit den Saugschläuchen 66 über die Flüssigkeitsaugrohre 68.1 und 68.2 die Kanäle, Ventilteile und dgl. in dem Haltergehäuse 61 mitWasser gefüllt und stets mitgereinigt werden.

Wenn eine Reinigung und Desinfektion der Saugschläuche 66 gewünscht wird, so werden ihre freien Enden 66.1 in die Ansteckanschlüsse 100 passend eingesteckt. Dadurch wirkt der Sog in der Luftzufuhr 95. Die Injektoranordnung zieht über den Injektorspalt 96 Flüssigkeit 74 im Flüssigkeitsaugrohr 90 über die Überlaufkante 90.3 in den Injektorraum 92 und von da in den Luftstrom und den Gemischverteilungsraum. Dort werden Luft und Flüssigkeit zu einem Nebelgemisch vermischt, über den Verteilraum 99 und die Verteilräume 106 den Saugschlauchenden 66.1 in ihrem stirnseitigen Bereich und in ihren Innenbereichen zugeführt. Die Flüssigkeit und das Luftgemisch passieren die ganzen Saugschläuche 66 und die Kanäle im Haltergehäuse 61 und gelangen über die Ausgangsleitung 64 und eine nicht dargestellte Separierautomatik zum Abfluß. Die Elektrode 74.3 ist als Überfüllsicherung geschaltet. Die Elektrode 74.4 ist als Wassermangelsicherung geschaltet. Die Elektrode 74.5 wird bei dem in Folge der Sogwirkung über dem Flüssigkeitsspiegel 72 ansteigenden Flüssigkeitsstrom im Flüssigkeitsaugrohr 90 benetzt. Im Zusammenwirken mit der Masse-Elektrode 74.1 gibt sie das Startsignal für das entsprechend gestaltete Programm der Schaltung 25 ab. Zunächst wird im Normalprogramm für etwa drei Minuten Wasser angesaugt, um alle Anlageteile zunächst mit Wasser gut vorzureinigen und freizuspülen. Wird der Schalter 118 betätigt, so läuft das ganze Zeitprogramm mit reiner Waaserspülung durch und das Konzentratmagnetventil 36 bleibt geschlossen.

./18

0124887

Normalerweise, wenn gespült, gereinigt und desinfiziert werden soll, tritt nach einer vorgegebenen und ggf. im Programm einstellbaren Wasservorspülzeit von beispielsweise drei Minuten eine entsprechende Zeiteinheit des Programms in Tätigkeit und öffnet das Konzentratmagnetventil 36, so daß durch den Injektor 38 vom durch den Wassereinlaß 33 eintretenden Wasser nunmehr auch Konzentrat 20 aus den Vorratsbehälter über die Gefäßkonzentratleitung 45 und die Konzentratleitung 46 in die Pumpe 24 gesaugt wird, so daß sie am Flüssigkeitsausgang 41 ein entsprechend der Dimensionierung gebildetes Wasser-Konzentrat-Gemisch beispielsweise im Verhältnis 95 : 5 abgibt und durch die Zuführleitung in den Zwischensammelbehälter 70 in der S-V-A-Baugruppe fördert, so daß nach Absaugen des vorhandenen Wasservorrates nunmehr durch das Flüssigkeits-Saugrohr 90 und den Injektorraum 92 sowie den Injektorspalt 96 nicht mehr reines Wasser, sondern Wasser-Konzentrat-Gemisch in die Verteilräume 98, 99 und 106 und damit in die Saugschläuche eintritt und alle vorhandenen Bakterien abtötet sowie weiter zum Abtransport von Schmutzresten beiträgt, zumal das Konzentrat 20 in der Regel auch entsprechende Reinigungsbestandteile enthält.

Nach einer vorgegebenen und ggf. einstellbaren Desinfektionszeit von etwa drei Minuten veranlaßt die Schaltung 25 das Schließen des Konzentratmagnetventils 36. Nunmehr wird wiederum nur Wasser durch die Zuführleitung 11 in den Zwischensammelbehälter 70 gefördert und in dieSaugschläuche 66 eingesaugt. Nach einer Wassernachspülzeit von beispielsweise etwa 15 Sekunden wird die Pumpe 24 von der Schaltung 25 abgeschaltet, so daß keine Flüssigkeit mehr gefördert wird. Nach Leersaugen des Zwischensammelbehälters 70 wird noch eine gewisse Zeit,von beispielsweise 30 Sekunden,der Luftsaugstrom aufrechterhalten, um restliches Wasser abzusaugen. Dann wird der Saugstrom mit Hilfe der Schaltung 25 unterbrochen, beispielsweise durch Abschalten der Saugmaschine oder Verschließen des entsprechenden Ventils an der nicht
dargestellten Separierautomatik.

In die Programmschaltung 25 sind weiterhin entsprechende
Elemente eingebaut, daß der Füllstand des Konzentrats 20
im Vorratsgefäß 18 kontrolliert werden kann. Erreicht
der Flüssigkeitsspiegel die obere Elektrode 53 und
sinkt darunter ab, so leuchtet eine der Ahzeigeleuchten 119
auf und zeigt das Nachfüllen von Konzentrat an. Es ist
dann noch ein Vorrat von mindestens vier bis fünf Desinfektionsprogrammen im Vorratsgefäß 18 bis auch die mittlere
Elektrode 52 freigelegt wird. Dann verändert sich ggf.
das Anzeigesignal der Anzeigeleuchte 119 beispielsweise
von Blinken auf Dauerlicht oder umgekehrt. Außerdem kann
die Programmschaltung 25 ein entsprechendes Signal an
die Sauganlage abgeben, daß der Saugberrieb automatisch
durch Abschalten der Saugmaschine bzw. Verschließen des
Hauptsaugventils unterbrochen wird, damit mit der Anlage
nicht unter unhygienischen Bedingungen gearbeitet werden
kann.

Die weitere Anzeigeleuchte 119 kann beispielsweise irgendeinen Defekt in der Anlage, Wassermangel oder dgl. anzeigen. Nach beendigter Desinfektion, Nachspülung und
Nachsaugen werden die Saugschläuche 66 mit ihren Enden 66.1
aus den Ansteckanschlüssen 100 herausgezogen und in ihre
Gabelhalterungen 67 eingehängt und können in üblicher
Weise wieder benutzt werden.

Die Vorrichtung ist in ihrer Gesamtheit relativ einfach,
gestattet es nunmehr durch einfaches Umstecken der Enden 66.1
der Saugschläuche 66 diese in allen Bereichen automatisch
zu spülen, zu reinigen und zu desinfizieren, was bisher
nur mit verschiedenen manuellen Arbeitsvorgängen einwandfrei möglich war. Die beschriebenen Sicherheitseinrichtungen
gewährleisten, daß die Hygienevorschriften auch eingehalten
werden und erleichtern so dem Zahnarzt und der Helferin
die Arbeit. Die pneumatischen und fluidischen Teile der
Anlage sind einfach und betriebssicher aufgebaut und kompakt angeordnet. Die meisten Teile können im Spritzgußverfahren aus Kunststoff günstig hergestellt und einfach angebracht werden. Die Konfiguration der Gehäuse kann den jeweiligen Bedürfnissen entsprechend variiert werden.

Die Vorrats- und Pumpeneinheit 12 kann auch für andere Sammel- Verteil- und Absaugbaugruppen 13 oder sonstige automatische Desinfektionseinrichtungen verwendet werden. Anstelle des fest passend eingebauten Vorratsgefäßes 18 kann eine entsprechende Aufnahme für Wegwerfvorratsgefäße vorgesehen sein. Bei der dargestellten Anordnung wird das Vorratsgefäß 18 nach Hochklappen des Klappdeckels 17 seitlich herausgezogen, wobei die Steckanschlüsse sich lösen und beim Wiedereinstecken die nötigen Verbindungen problemlos herstellen. Auch diesbezüglich sind verschiedene Variationen möglich, insbesondere bezüglich der Lage der Steckanschlüsse, der Gehäuseausbildung und dgl. Auch können die Pumpen und Ventile in anderer Weise realisiert sein.

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d **0124887**
BW-Bank Heilbronn: 701 17106 00 (BLZ 620 300 50) Postscheck Stuttgart: 43016-704

Europäische Patentanmeldung — D 12. 12 EP 49
2. Mai 1984/1S

Anmelder:  Firma
Dürr-Dental GmbH & Co. KG

Höpfigheimer Straße 17
Postfach          305

D-7120 Bietigheim

Bezeichnung:  Vorrichtung zur Bereitstellung, ggf. Mischung
mit Wasser und Zuführung von Reinigungs- und
Desinfektionsflüssigkeit zu zahnärztlichen
Sauganlagen

Bezugszeichenliste:

| | | | |
|---|---|---|---|
| 10 | Vorrichtung | 27 | Wasserzwischen-sammelbehälter |
| 11 | Zuführleitung | | |
| 11.1 | Ende von 11 | 27.1 | Steuerschwimmer |
| 11.2 | Aufsteckanschluß | 27.2 | Überlaufanschluß |
| 11.3 | oberes freies Ende | 27.3 | Überlaufsicher-heitsöffnung |
| 12 | Vorrats- und Pumpeneinheit (V-P-Einheit) | 28 | Auslaßanschluß |
| 13 | Sammel-Verteil- und Absaugbaugruppe (S-V-A-Baugruppe) | 29 | Steuerleitung |
| | | 33 | Wassereinlaß |
| 15 | V-P-Gehäuse | 34 | Wassersaugleitung |
| 16 | Vorratsgefäßaufnahmeraum | 35 | Konzentrateinlaß |
| 17 | Klappdeckel | 36 | Konzentratmagnet-ventil |
| 18 | Vorratsgefäß | | |
| 18.1 | Boden von 18 | 37 | Konzentratausgang |
| 19 | Einfüllöffnung | 38 | Injektor |
| 20 | Desinfektions- und ggf. Reini-gungskonzentrat = "Konzentrat 20" | 39 | Gehäuse |
| | | 41 | Flüssigkeitsausgang |
| | | 45 | Gefäßkonzentrat-leitung |
| 21 | Dichtung | | |
| 23 | Wasserzuführung | 45.1 | unteres Ende |
| 24 | Pumpe | 45.2 | Filter |
| 24.1 | Elektromotor | 45.3 | Konzentratsteckende |
| 25 | Schaltung | 46 | Konzentratleitung |
| 26 | Wasseranschluß | 47 | Steckanschlußhalter |
| 26.1 | Wassermagnetventil | 48 | Gehäusewand |
| | | 49 | Steckaufnahme |
| | | 50 | Dichtung |

0124887

| 51 | Elektrode |
| 52 | Elektrode |
| 53 | Elektrode |
| 51.1 | Elektroden-Steckende |
| 52.1 | Elektroden-Steckende |
| 53.1 | Elektroden-Steckende |
| 51.2 | elektrischer Steckkontakt |
| 52.2 | elektrischer Steckkontakt |
| 53.2 | elektrischer Steckkontakt |
| 60 | Desinfektionsanschlußgehäuse |
| 60.1 | Mittelteil |
| 60.2 | Deckelteil |
| 60.3 | Boden |
| 60.5 | unteres Gehäuseteil |
| 60.6 | Anschlußplatte |
| 61 | Haltergehäuse |
| 62 | Kanal |
| 63 | Ventil |
| 64 | Ausgangsleitung |
| 65 | Eingang |
| 66 | Saugschlauch |
| 67 | Gabelhalterung |
| 68.1 | Flüssigkeitssaugrohr |
| 68.2 | Flüssigkeitssaugrohr |
| 70 | Zwischensammelbehälter |
| 71 | Flüssigkeit |
| 72 | Flüssigkeitsspiegel |
| 74 | Elektrode |
| 74.1 | Elektrode |
| 74.2 | Elektrode |
| 74.3 | Elektrode |
| 74.4 | Elektrode |
| 74.5 | Elektrode |
| 75 | Schaltung |
| 76 | Anschlußeinheit |
| 77 | Leitung |
| 66.1 | Saugschlauch-Ende |

| 85 | Standrohr |
| 85.1 | Lufteinlaß |
| 85.2 | Flüssigkeitseinlaß |
| 85.3 | Flüssigkeitsverteiler |
| 85.4 | Anschlußstutzen |
| 90 | Flüssigkeitsaugrohr |
| 90.1 | linker Rohrbereich |
| 90.2 | Öffnung zu 70 |
| 90.3 | Überlaufkante |
| 90.4 | rechter Flüssigkeitssaugrohrbereich |
| 90.5 | Öffnung zu 92 |
| 92 | Injektorraum |
| 95 | Luftzufuhr |
| 95.1 | Injektoreingangsrohr |
| 95.2 | Injektordurchmesser |
| 96 | Injektorspalt |
| 97 | Injektorausgangstrichter |
| 97.1 | Durchmesser |
| 98 | Gemischverteilungsraum |
| 98.1 | Öffnung |
| 99 | Verteilraum |
| 100 | Ansteckanschluß |
| 100.1 | Ansteckanschluß |
| 100.2 | Ansteckanschluß |
| 100.3 | Ansteckanschluß |
| 102 | Rastrand |
| 103 | Einsteckanschlag |
| 106 | Verteilraum |
| 107 | Einlaßstutzen |
| 108 | Zentralöffnung |
| 109 | Prallplatte |
| 110 | Seitenöffnung |
| 115 | Klemmrohrteil |
| 116 | Rast- und Haltenocken |
| 118 | Schalter |
| 119.1 | Anzeigeleuchte |
| 119.2 | Anzeigeleuchte |

0124887

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

Europäische Patentanmeldung                    D 12. 12 EP 49
                                               2. Mai 1984/1S

Anmelder:        Firma
                 Dürr-Dental GmbH & Co. KG

                 Höpfigheimer Straße 17
                 Postfach          305

                 D-7120 Bietigheim


Bezeichnung:   Vorrichtung zur Bereitstellung, ggf. Mischurg
               mit Wasser und Zuführung von Reinigungs- und
               Desinfektionsflüssigkeit zu zahnärztlichen
               Sauganlagen
Ansprüche:


1.   Vorrichtung (10) zur Bereitstellung , ggf. Mischung
     mit Wasser und Zuführung von Reinigungs- und Desinfektionsflüssigkeit zu zahnärztlichen Sauganlagen,
     bei der die Flüssigkeiten in einem Vorratsbehälter
     (18, 70) zur Verfügung stehen und über eine Leitung
     dem freien Endbereich (66.1) der Saugschläuche (66)
     zuführbar sind,
     d a d u r c h   g e k e n n z e i c h n e t ,
     daß im Bereich der Halteeinrichtungen (61, 67) der
     nicht benutzten Saugschlauchenden (66, 66.1) ein
     Zwischensammelbehälter (70) vorgesehen ist, der
     eine frei in seinem oberen Bereich endende Zuführleitung (11.3) für die Flüssigkeiten aufweist, aus
     der Wasser oder Wasser-Reinigungs- und/oder Desinfektionsmittel-Gemisch in den Zwischensammelbehälter(70)
     eintritt und wobei im Zwischensammelbehälter wenigstens ein Flüssigkeitssaugrohr (90, 85) angeordnet
     ist, welches zu einem Ansteckanschluß (100) für das
     Ende (66.1) eines Saugschlauches (66) führt.

                                               ./2

2. Vorrichtung nach Anspruch 1,
d a d u r c h  g e k e n n z e i c h n e t ,
daß mehrere Ansteckanschlüsse (100.1, 100.2, 100.3)
mit vom Zwischensammelbehälter zu ihnen führenden
Flüssigkeitssaugrohren vorgesehen sind.

3. Vorrichtung nach Anspruch 1,
d a d u r c h  g e k e n n z e i c h n e t ,
daß mehrere Ansteckanschlüsse (100.1, 100.2, 100.3)
mit einem gemeinsamen Flüssigkeitssaugrohr (90) und
Verteilern (98, 99, 106) vorgesehen sind.

4. Vorrichtung nach einem oder mehreren der übrigen Ansprüche,
d a d u r c h  g e k e n n z e i c h n e t ,
daß in dem Flüssigkeitssaugrohr (90, 95, 99) zwischen
Zwischensammelbehälter (70) und Ansteckanschluß (100)
wenigstens ein Nebenlufteinlaß (Luftzufuhr 95) vorgesehen ist.

5. Vorrichtung nach einem oder mehreren der übrigen Ansprüche,
d a d u r c h  g e k e n n z e i c h n e t ,
daß dem Flüssigkeitssaugrohr (90) eine Atmosphären-
luftzuführeinrichtung (95) mit Injektoranordnung (95.2,
97.1, 96, 92) zugeordnet ist, durch welche die den
Saugschläuchen (66) zugeführte Saugluft gelangt und
die Flüssigkeit (71) aus dem Zwischensammelbehälter (70)
absaugt.

6. Vorrichtung nach einem oder mehreren der übrigen Ansprüche,
d a d u r c h  g e k e n n z e i c h n e t ,
daß Leitungslängen und Leitungsquerschnitte unter Berücksichtigung der üblichen Saugdrucke und Saugmengen
als Dosier- und/oder Drosselquerschnitte ausgelegt
sind.

7.  Vorrichtung nach einem oder mehreren der übrigen Ansprüche,
    d a d u r c h   g e k e n n z e i c h n e t ,
    daß die Ansteckanschlüsse (100) mit     die Saugschlauchenden (66.1) auch in dem Dichtbereich für die Saugkanüle frei angreifenden Klemmhaltern (102, 106) aus-
    gestattet sind.

8.  Vorrichtung nach einem oder mehreren der übrigen Ansprüche,
    d a d u r c h   g e k e n n z e i c h n e t ,
    daß Einsteckanschläge (103) für die Saugschlauchenden
    (66.1) vorgesehen sind, welche ein freies Umspülen
    der Saugschlauchenden und aller Leitungsbereiche
    gestatten.

9.  Vorrichtung nach einem oder mehreren der übrigen Ansprüche,
    d a d u r c h   g e k e n n z e i c h n e t ,
    daß für die Saugschlauchenden (66.1) diese von außen
    umgreifende Einsteckkappen (100) vorgesehen sind.

10. Vorrichtung nach einem oder mehreren der übrigen Ansprüche,
    d a d u r c h   g e k e n n z e i c h n e t ,
    daß in die Saugschlauchenden (66.1) eingreifende,
    geschlitzte, nur punkt- oder linienförmig angreifende
    Klemmrohrteile (115, 116) vorgesehen sind.

11. Vorrichtung nach einem oder mehreren der übrigen Ansprüche,
    d a d u r c h   g e k e n n z e i c h n e t ,
    daß weitere Flüssigkeitssaugrohre (85, 68) zu den
    Eingangsbereichen von Absperrelementen (63) der
    Saugschläuche (66) führen.

12. Vorrichtung nach einem oder mehreren der übrigen Ansprüche,
    d a d u r c h   g e k e n n z e i c h n e t ,
    daß die Vorrichtung (13) in einem an das Haltergehäuse
    (61) der Saugschläuche (66) passenden Desinfektionsanschlußgehäuse (60) angeordnet ist.

13. Vorrichtung nach Anspruch 12,
d a d u r c h   g e k e n n z e i c h n e t ,
daß das Desinfektionsanschlußgehäuse (60) als in
der Querschnittskonfiguration zur Konfiguration
des Haltergehäuses (61) der Saugschläuche (66) mit
Anschluß- und Ventilelementen passendes, seitlich
ansetzbares Bauelement ausgebildet ist.

14. Vorrichtung nach einem oder mehreren der übrigen Ansprüche,
d a d u r c h   g e k e n n z e i c h n e t ,
daß dem Zwischensammelbehälter (70) Füllstandsfühleinrichtungen (Elektroden 74) zugeordnet sind.

15. Vorrichtung nach Anspruch 14,
d a d u r c h   g e k e n n z e i c h n e t ,
daß die Füllstandsfühlreinrichtungen (74) von in den
Zwischensammelbehälter (70) ragenden, unterschiedlich
langen Elektroden (74.1, 74.2, 74.3, 74.4, 74.5)
gebildet sind.

16. Vorrichtung nach einem oder mehreren der übrigen Ansprüche,
d a d u r c h   g e k e n n z e i c h n e t ,
daß   den Füllstandsfühleinrichtungen (74) eine
Steuerschaltung (25) zugeordnet ist, die die Zuführung von Wasser und/oder Wasser-Reinigungs- und/oder
Desinfektionsmittel-Gemisch steuert.

17. Vorrichtung, insbesondere nach einem oder mehreren der
vorangehenden Ansprüche,
g e k e n n z e i c h n e t   d u r c h
ein ortsfestes Geräteteil (V-P-Gehäuse 15) mit Zuführmitteln für die Flüssigkeitszufuhr, vorzugsweise zu dem
Zwischensammelbehälter (70), wenigstens jedoch zu
Sauganlagenteilen (61, 68.2) und insbesondere zu den
Saugschlauchenden (66.1), welches ein abnehmbares
und/oder austauschbares Vorratsgefäß (18) für Desinfektions- und ggf. Reinigungskonzentrat (20) aufweist,
wobei eine am Boden (18.1) des Vorratsgefäßes entnehmende

0124887

Konzentratleitung (45,45.1), die steckbar (45.3, 49)
mit dem ortsfesten Geräteteil (15, 49) verbindbar
ist, und Füllstandsfühler (51, 52, 53) vorgesehen sind.

18. Vorrichtung nach Anspruch 17,
d a d u r c h   g e k e n n z e i c h n e t ,
daß eine aus einer Wasserzuführung (23) mit Wasser-
Zwischensammelbehälter (27) absaugende Pumpe (24)
vorgesehen ist, welche einen Mischeinlaß (33, 38, 35)
für Desinfektions- und ggf. Reinigungskonzentrat (20)
aufweist.

19. Vorrichtung nach Anspruch 18,
d a d u r c h   g e k e n n z e i c h n e t ,
daß die Pumpe (24) als Saugpumpe mit Injektorzuführung (38) des Konzentrats (20) ausgebildet ist.

20. Vorrichtung nach Anspruch 18 oder 19,
d a d u r c h   g e k e n n z e i c h n e t ,
daß die Konzentratleitung (46) ein von einer
Schaltung (25) betätigbares Konzentratmagnetventil (36)
aufweist.

21. Vorrichtung nach einem oder mehreren der übrigen Ansprüche,
d a d u r c h   g e k e n n z e i c h n e t ,
daß eine Steuerschaltung (25) vorgesehen ist, welche
die Wasserspülzeiten, die Wasser-Desinfektionsmittel-
Gemisch- Spülzeiten und ggf. Wassernachspülzeiten
vorgibt und steuert.

22. Vorrichtung nach einem oder mehreren der übrigen Ansprüche,
d a d u r c h   g e k e n n z e i c h n e t ,
daß die Steuerschaltung (25) mit Füllstandsfühlern (51,
52, 53) für das Vorratsgefäß (18) zusammenwirkt und
den abnehmenden Füllstand anzeigt (119) und ggf. bei
fehlendem Konzentrat (20) ein die Anlage abschaltendes
Signal abgibt.

23. Vorrichtung nach einem oder mehreren der übrigen Ansprüche, d a d u r c h   g e k e n n z e i c h n e t , daß eine Wassermangelanzeige- und ggf. Betriebsverhinderungseinrichtung vorgesehen ist.

24. Vorrichtung nach einem oder mehreren der übrigen Ansprüche, d a d u r c h   g e k e n n z e i c h n e t , daß der Schaltung (25) Anzeigeglieder (119) für den Füllstand des Konzentrats (20) und/oder den Füllungszustand des Zwischensammelbehälters (70) und/oder die Wassermangelsicherung (74.5) zugeordnet sind.

0124887

1/3

Fig.1

0124887

Fig. 2

3/3

Fig. 3